# EUROPÄISCHE PATENTSCHRIFT

(11) **EP 0 654 625 B1**
(45) Veröffentlichungstag und Bekanntmachung des Hinweises auf die Patenterteilung: **31.03.1999**
(21) Anmeldenummer: 94116653.0
(22) Anmeldetag: 21.10.1994
(51) Int. Cl.: F16J 15/10

(54) **Flachdichtung für Kraftstofftanks**
Flat sealing for fuel tanks
Joint plat pour réservoirs d'essence

(30) Priorität: 23.11.1993 DE 9317924 U
(43) Veröffentlichungstag der Anmeldung: 24.05.1995
(73) Patentinhaber: W.L. GORE & ASSOCIATES GmbH, 85636 Putzbrunn (DE)
(72) Erfinder: Rüsch, Hans-Jörg, D 85521 Ottobrunn (DE); Nebelung, Heike, D 91785 Pleinfeld (DE); Burmann,Gerhard, D 91174 Spalt (DE)
(74) Vertreter: Klunker . Schmitt-Nilson . Hirsch

(56) Entgegenhaltungen:
- EP-A- 0 303 102
- EP-A- 0 510 666
- WO-A-90/11309
- DE-A- 1 450 364
- DE-A- 2 711 399
- DE-A- 4 137 711
- FR-A- 1 372 001

## Beschreibung

Die Erfindung betrifft eine Flachdichtung für Kraftstofftanks von Flugzeugen aus mikroporösem, verstrecktem PTFE. Eine derartige Dichtung ist beispielsweise aus der EP-A-0 303 102 bekannt.

Zur Abdichtung von verschraubten Zugangsdeckeln an Flugzeugen ist es bekannt, statt Zweikomponenten-Dichtmassen Flachdichtungen bzw. Dichtbänder vorzusehen, die aus mikroporösem, verstrecktem PTFE bestehen. Vorzugsweise ist eine Kante des Dichtbandes wulstartig verdickt, wobei dieser Außenwulst zum Auffüllen der Außenspalte zwischen Struktur und Deckel dient. Diese Dichtbänder sind einfach und wirtschaftlich einzubauen. Sie gleichen unabhängig von der Deckelform die Unebenheiten der Dichtflächen selbst bei geringem Anpressdrücken hervorragend aus. Im Hinblick auf die universelle Chemikalienbeständigkeit von PTFE eignen sich die bekannten Dichtbänder auch zum Abdichten von Kraftstofftanks. Dabei stellt es sich jedoch heraus, daß sich das Dichtungsmaterial nach längerer Betriebszeit mit Kraftstoff vollsaugt. Obwohl dieser Zustand die Dichtfunktion nicht beeinflußt, ist dieser Zustand wegen der auftretenden geringfügigen Undichtigkeit und der damit verbundenen Kraftstoff-Ausdünstungen nicht erwünscht.

Das genannte Problem wird durch eine Dichtung mit den Merkmalen des Hauptanspruchs gelöst. Zentrales Merkmal der erfindungsgemäßen Dichtung ist die wenigstens teilweise Beschichtung der Dichtung mit einem lösungsmittelresistenten Kunststofflack, vorzugsweise Polyester-Polyurethanlack. Die Lackschicht verhindert ein Eindringen von Kraftstoff in das Dichtungsmaterial. Es reicht dabei aus, wenn nur diejenigen Bereiche der Dichtung mit Polyester-Polyurethan beschichtet sind, die mit dem Kraftstoff in Kontakt kommen. Vorzugsweise werden nur die Kanten von Dichtbändern beschichtet. Bei Dichtbändern mit nur einer wulstartig verdickten Kante wird vorzugsweise dieser Kantenwulst beschichtet.

Die neuartige Dichtung vereint die vorteilhaften Eigenschaften beider Materialien. Polyester-Polyurethan bildet eine dichte Haut und schirmt das Dichtungsmaterial gegen das Eindringen flüssiger Medien ab. Die eigentliche Dichtungsfunktion wird jedoch von dem nachgiebigen mikroporösen, verstrecktem PTFE-Material erfüllt.

Zur Erleichterung der Montage können die beschichteten Bereiche mit einer Kontrastfarbe eingefärbt sein, jedenfalls dann, wenn nur eine Kante der Dichtung beschichtet ist.

Das hier verwendete Polyester-Polyurethan ist unter dem Handelsnamen Elastolan Typenreihe-C auf dem Markt als Granulat erhältlich. Das Granulat wird in einem geeigneten Lösungsmittel aufgelöst. Vorzugsweise wird Tetrahydrofuran (THF) oder Dimethylformamid (DMF) verwendet. THF verdampft schneller, und ist daher als Lösungsmittel besonders geeignet.

Der Lack kann auf die Dichtung aufgestrichen oder aufgesprüht werden. Die Dichtung kann in den flüssigen Lack auch teilweise oder ganz eingetaucht werden.

Statt Polyester-Polyurethan kann auch ein anderer geeigneter Kunststoff verwendet werden.

Nachfolgend wird eine Ausführungsform der Erfindung anhand der beigefügten Zeichnung beispielsweise beschrieben. Darin zeigen:
Figur 1 einen Querschnitt durch eine Flachdichtung und
Figur 2 ein Einbaubeispiel.

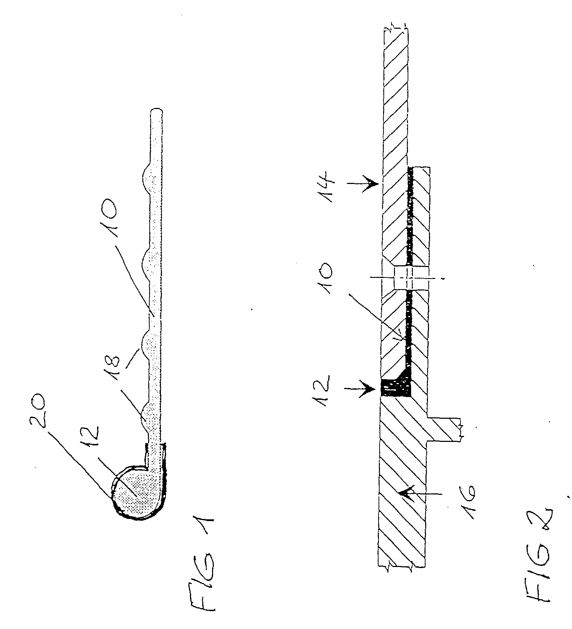

Das in Figur 1 im Querschnitt gezeigte Dichtband 10 besteht aus mikroporösem, gerecktem Polytetrafluorethylen (PTFE). Verfahren zur Herstellung dieses Materials sind in den US-Patentschriften 3,953,566 und 4,187,390 beschrieben. Das Material ist unter dem Handelsnamen GORE-TEX (eingetragenes Warenzeichen der W. L. Gore & Associates) auf dem Markt erhältlich.

Eine Seitenkante der Flachdichtung ist wulstartig verdickt. Der Kantenwulst 12 dient zum Auffüllen der Außenspalte zwischen Struktur 16 und Deckel 14. Die Dichtung im eingebauten Zustand zeigt Figur 2.

Die an den Außenwulst 12 anschließenden kleinen Rippen 18 dienen als Dichtlippen. Sie verbessern die Anpassung der Dichtung an unebene Dichtflächen.

Das Dichtband ist im Bereich des Außenwulstes 12 mit einer Polyester-Polyurethan-Beschichtung 20 versehen. Die Beschichtung wird als flüssiger Lack aufgebracht. Zur Herstellung des Lackes verwendet man ein Granulat, das in einem geeigneten Lösungsmittel gelöst wird. Als Lösungsmittel kommt Tetrahydrofuran (THF) oder Dimethylformamid (DMF) in Frage. THF ist zu bevorzugen, da es schneller verdampft.

Das Granulat wird von der BASF-Gruppe unter dem Handelsnamen Elastolan Typenreihe-C vertrieben. Das Material C85A war besonders geeignet.

Das in Figur 1 gezeigte Dichtband ist nur im Bereich des Kantenwulstes 12 beschichtet. Selbstverständlich können auch andere Bereiche oder die gesamte Dichtung beschichtet werden. Von Bedeutung ist lediglich, daß diejenigen Bereiche beschichtet sind, die im eingebauten Zustand der Dichtung mit dem Kraftstoff in Kontakt kommen.

Die Beschichtung kann aufgestrichen oder aufgesprüht werden. Auch ein Eintauchen der Dichtung in Lack ist möglich.

## Patentansprüche

1. Flachdichtung für Kraftstofftanks von Flugzeugen aus mikroporösem, verstrecktem Polytetrafluorethylen, **dadurch gekennzeichnet,** daß die Dichtung (10) wenigstens teilweise mit einer Beschichtung (20) aus einem lösungsmittelresistenten Kunststofflack versehen ist.

2. Flachdichtung nach Anspruch 1, **dadurch gekennzeichnet,** daß die Beschichtung (20) ein Polyester-Polyurethan ist.

3. Flachdichtung nach Anspruch 1 oder 2, **dadurch gekennzeichnet,** daß die Beschichtung(20) auf diejenigen Bereiche der Dichtung begrenzt ist, die mit Kraftstoff in Berührung kommen.

4. Flachdichtung nach Anspruch 2 oder 3, **dadurch gekennzeichnet,** daß das Polyester-Polyurethan aufgesprüht, aufgestrichen oder durch Tauchen aufgebracht ist.

5. Flachdichtung nach einem der Ansprüche 1 bis 4, **dadurch gekennzeichnet,** daß die Beschichtung (20) mit einer Kontrastfarbe eingefärbt ist.

## Claims

1. A flat packing for airplane fuel tanks made of microporous, stretched polytetrafluoroethylene, characterized in that the packing (10) is provided at least partly with a coating (20) of a solvent-resistant plastic lacquer.

2. The flat packing of claim 1, characterized in that the coating (20) is a polyester-potyurethane.

3. The flat packing of claim 1 or 2, characterized in that the coating (20) is limited to those areas of the packing which come in contact with fuel.

4. The flat packing of claim 2 or 3, characterized in that the polyester-polyurethane is sprayed on, spread on or applied by Immersion.

5. The flat packing of any of claims 1 to 4, characterized in that the coating (20) is dyed with a contrasting color.

## Revendications

1. Garniture plate pour réservoirs d'essence d'avion faite de polytétrafluoroéthylène, microporeux, embouti, caractérisée par le fait que la garniture (10) est munie, au moins partiellement, d'un revêtement (20) d'un vernis plastique résistant aux solvants.

2. La garniture plate de la revendication 1, caractérisée par le fait que le revêtement (20) est un polyuréthane obtenu à partir d'un polyester.

3. La garniture plate de la revendication 1 ou 2, caractérisée par le fait que le revêtement (20) est limité aux zones de la garniture qui viennent en contact avec l'essence.

4. La garniture plate de la revendication 2 ou 3, caractérisée par le fait que le polyuréthane obtenu à partir d'un polyester est pulvérisé, étalé ou appliqué par immersion.

5. La garniture plate de l'une quelconque des revendications 1 à 4, caractérisée par le fait que le revêtement (20) est teinté avec une couleur formant contraste.
